(19) Europäisches Patentamt
European Patent Office
Office européen des brevets

(11) EP 1 536 500 A1

(12) **EUROPEAN PATENT APPLICATION**
published in accordance with Art. 158(3) EPC

(43) Date of publication:
**01.06.2005 Bulletin 2005/22**

(21) Application number: **03753929.3**

(22) Date of filing: **18.08.2003**

(51) Int Cl.[7]: **H01M 4/86**, H01M 4/88, H01M 8/10

(86) International application number:
**PCT/JP2003/010399**

(87) International publication number:
**WO 2004/017446 (26.02.2004 Gazette 2004/09)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **16.08.2002 JP 2002237229**
**14.02.2003 JP 2003037435**

(71) Applicant: **Yamaguchi, Takeo**
**Kawasaki-shi, Kanagawa 216-0005 (JP)**

(72) Inventors:
- **YAMAGUCHI, Takeo**
  **Kawasaki-shi, Kanagawa 216-0005 (JP)**
- **MIZUHATA, Hirotaka**
  **Ojicho, Kitakatsuragi-gun, Nara 636-0001 (JP)**

(74) Representative: **Kinzebach, Werner, Dr.**
**Reitstötter, Kinzebach & Partner (GbR),**
**Patentanwälte,**
**Sternwartstrasse 4**
**81679 München (DE)**

(54) **ELECTRODE FOR FUEL CELL, FUEL CELL INCLUDING THE ELECTRODE AND PROCESS FOR PRODUCING THE SAME**

(57) An electrode for fuel cell, such as electrode for solid polymer fuel cell, having three-phase interfaces arranged therein in an efficient fashion so as to exhibit enhanced fuel cell characteristics. Inparticular, an electrode for fuel cell comprising a porous electro-conductive material carrying a catalyst and, arranged on the surface, including pores, thereof or in its vicinity, a proton-conductive substance **characterized in that** the proton-conductive substance is one obtained by carrying out coupling or polymerization of a proton-conductive substance precursor, a proton-conductive monomer or an equivalent thereof on the surface or in the vicinity.



Printed by Jouve, 75001 PARIS (FR)

## Description

### Technical Field

The present invention generally relates to an electrode for fuel cell, for example an electrode for solid polymer fuel cell; a fuel cell using the electrode, for example a solid polymer fuel cell; and methods for producing the electrode and the fuel cell.

### Background Art

There have been the needs to build up a fuel cell having higher energy conversion efficiency and less emission of Nox or Sox, in order to deal with environment or energy issues. In particular, a solid polymer fuel cell (PEFC or Polymer Electrolyte Fuel Cell) has excellent characteristics of a low temperature operation at a high output density and water generation only in power generation reaction. Further, there have been the needs to build up a direct methanol fuel cell (DMFC or direct methanol polymer fuel cell) directly using methanol, which is excellent in portability as a fuel.
In this regard, it has been desired to solve reduction in performance caused by the following electrode reaction.

$$\text{Anode: } H_2 \rightarrow 2H^+ + 2e^-;$$

$$\text{Cathode: } 1/2O_2 + 2H^+ + 2e^- \rightarrow H_2O;$$

$$\text{Total reaction: } H_2 + 1/2O_2 \rightarrow H_2O.$$

It has been considered that the problem can be solved by efficiently arranging three-phase interfaces in an electrode through which donation and acceptance of reacting substances (for example, $H_2$ and $O_2$), protons ($H^+$) and electrons ($e^-$) can be performed at the same time.
A construction of a fuel cell is such that an anode and a cathode are generally arranged so that an electrolyte is sandwiched between the electrodes. The electrodes have respective electrode catalyst layers if desired. As a method for producing the electrode catalyst layers, there has been available a method in which a mixed solution of a catalyst-carrying carbon black and a proton conductive polymer such as Nafion (registered trade mark) is directly coated on an electrolyte (for example, see M. S. Willson et al., *J. Electrochemical. Soc.* 139 (2) (1992) 28-30). In the method, however, only a part of the catalysts carried on the carbon black is actually used for three-phase interfaces, so that a performance depending on a catalyst quantity has not been exerted.
As means for efficiently arranging the three-phase interfaces, for example, it is considered to increase an introduced amount of the catalysts in an electrode reaction. As a catalyst, however, a noble metal such as Pt has been generally used. Thus, increased amount of the catalysts leads to a problem of significantly increased cost.
Another means for efficiently arranging the three-phase interfaces with a suppressed amount of the catalyst is disclosed in Japanese Patent Laid-Open Application (JP-A) No. 2002-100374 and the like. This publication discloses that a cation exchange resin and a catalyst are provided on surfaces of carbon particles, and that the catalyst is arranged in the vicinity (site X) of a portion of the cation exchange resin in contact with the surface of the carbon particles. That is, the means disclosed in JP-A No. 2002-100374 is to efficiently provide the three-phase interfaces by arranging a suppressed amount of the catalyst at the site X. This method cannot efficiently arrange both phases in an arbitrary manner, however, since in the method, a catalyst carrying site depends on a polymer placement site. Therefore, the method contributes to a suppressed amount of the catalyst introduced, whereas it is impossible to efficiently control the structure of a catalyst layer.

### Disclosure of the Invention

Accordingly, an object of the present invention is to provide an electrode for fuel cell, for example, an electrode for solid polymer fuel cell, in which electrode three-phase interfaces are efficiently arranged and which electrode has improved fuel cell characteristics.
In addition to the above-mentioned obj ect, another object of the present invention is to provide a fuel cell having the electrode for fuel cell, for example, a solid polymer fuel cell.
Further, in addition to, or other than the above-mentioned object, an object of the invention is to provide a method for producing the electrode for a fuel cell and a fuel cell having the electrode therein.

The inventors have conducted intensive studies with the result that the following matters have been found. That is, a catalyst is carried on an electron-conductive material such as carbon black as in a prior art, and the catalyst is also disposed in primary pores of the nanometer order to the micrometer order made of carbon black. Thereafter, a proton-conductive substance precursor including a proton-conductive monomer is disposed on a surface (including surfaces of primary pores) of the obtained catalyst-carrying carbon black, and then, the precursor (including a monomer) is coupled or polymerized to thereby form a proton-conductive substance, for example, a proton-conductive polymer. By disposing a proton-conductive substance, for example, a proton-conductive polymer, obtained from a monomer or the like in such a manner and a catalyst in primary pores, the three-phase interfaces can be arranged in primary pores (in other words, on a microscopic scale) . Usage of primary particles each having the tree-phase interfaces formed on a microscopic scale, secondary particles thereof or an assembly of primary and secondary particles as an electrode for fuel cell enables an electrode for fuel cell and a fuel cell each having more improved characteristics to be obtained.
Specifically, the inventors have found the following inventions.

<1> An electrode for fuel cell comprising a porous electron-conductive material carrying a catalyst, wherein a proton-conductive substance is arranged on a surface, including surfaces of pores, of the porous electron-conductive material or in the vicinity of the surface; and the proton-conductive substance is obtained by carrying out coupling or polymerization of a proton-conductive substance precursor, a proton-conductive monomer or an equivalent thereto on the surface or in the vicinity thereof.
<2> In the above item <1>, the catalyst may be a noble metal catalyst, and preferably the catalyst may comprise a catalyst having an element of platinum group.
<3> In the above item <1> or <2>, the catalyst may be Pt or Pt-Ru.
<4> In any one of the above items <1> to <3>, the porous electron-conductive material may be a carbon-based porous electron-conductive material.
<5> In the above item <4>, the carbon-based porous electron-conductive material may be selected from the group consisting of carbon black, acetylene black, graphite, carbon fiber, carbon nanotube, fullerene, activated carbon, and glass carbon.
<6> In any one of the above items <1> to <5>, the pores may have the average diameter of 10 μm or less, preferably 1 nm to 1 μm, more preferably 1 nm to 100 nm.
<7> In any one of the above items <1> to <6>, the proton-conductive substance may be not caused to flow out by a cell power generation operation from the surface of the porous electron-conductive material or in the vicinity thereof, in particular from inside the pore thereof. For example, the proton-conductive substance may be not caused to flow out by water from the surface of the material or in the vicinity thereof , in particular from inside the pore thereof.
<8> In any one of the above items <1> to <7>, one end of the proton-conductive substance may be bound to the surface of the porous electron-conductive material through a chemical bond.
<9> In any one of the above items <1> to <8>, the proton-conductive substance may have a sulfonic group ($-SO_3H$), a phosphoric group or a carboxyl group.
<10> In any one of the above items <1> to <9>, the proton-conductive substance may be a proton-conductive polymer having a sulfonic group ($-SO_3H$), a phosphoric group or a carboxyl group.
<11> In any one of the above items <1> to <10>, the proton-conductive substance may have a hydrophobic site, and the substance may be adsorbed in a hydrophobic manner to the surface of the porous electron-conductive material via the hydrophobic site.
<12> In the above item <11>, wherein the proton-conductive substance may be a proton-conductive polymer, the polymer having a hydrophobic site and the polymer being adsorbed in a hydrophobic manner to the surface of the porous electron-conductive material via the hydrophobic site.
<13> A fuel cell having an electrode for fuel cell described in any one of the above items <1> to <12>.
<14> A solid polymer fuel cell having an electrode for fuel cell described in any one of the above items <1> to <12>.
<15> A direct methanol solid polymer fuel cell having an electrode for fuel cell described in any one of the above items <1> to <12>.
<16> An electrode for fuel cell comprising a porous electron-conductive material carrying a catalyst, wherein a proton-conductive polymer is arranged on a surface of the porous electron-conductive material or in the vicinity of the surface; and the proton-conductive polymer is obtained by carrying out polymerization of a proton-conductive monomer or an equivalent thereto on the surface or in the vicinity thereof.
<17> In the above item <16>, the catalyst may be a noble metal catalyst, and preferably the catalyst may comprise a catalyst having an element of platinum group.
<18> In the above item <16> or <17>, the catalyst may be Pt or Pt-Ru.
<19> In any one of the above items <16> to <18>, the porous electron-conductive material may be a carbon-based porous electron-conductive material.

<20> In the above item <19>, the carbon-based porous electron-conductive material may be selected from the group consisting of carbon black, acetylene black, graphite, carbon fiber, carbon nanotube, fullerene, activated carbon, and glass carbon.

<21> In any one of the above items <16> to <20>, the pores may have the average diameter of 10 μm or less, preferably 1 nm to 1 μm, more preferably 1 nm to 100 nm.

<22> In any one of the above items <16> to <21>, the proton-conductive polymer may be not caused to flow out by a cell power generation operation from the surface of the porous electron-conductive material or in the vicinity thereof, in particular from inside the pore thereof. For example, the proton-conductive polymer may be not caused to flow out by water from the surface of the material or in the vicinity thereof, in particular from inside the pore thereof.

<23> In any one of the above items <16> to <22>, one end of the proton-conductive polymer may be bound to the surface of the porous electron-conductive material through a chemical bond.

<24> In any one of the above items <16> to <23>, the proton-conductive polymer may have a hydrophobic site, and the polymer may be adsorbed in a hydrophobic manner to the surface of the porous electron-conductive material via the hydrophobic site.

<25> A fuel cell having an electrode for fuel cell described in any one of the above items <16> to <24>.

<26> A solid polymer fuel cell having an electrode for fuel cell described in any one of the above items <16> to <24>.

<27> A direct methanol solid polymer fuel cell having an electrode for fuel cell described in any one of the above items <16> to <24>.

<28> A method for producing an electrode for fuel cell, comprising the steps of: a) causing a catalyst to be carried on a porous electron-conductive material; b) forming a proton-conductive substance on a surface, including surfaces of pores, of the porous electron-conductive material or in the vicinity thereof; and c) transforming the porous electron-conductive material into an assembly, wherein the steps can be changeable in the order thereof.

<29> A method for producing an electrode for fuel cell, comprising the steps of: a) causing a catalyst to be carried on a porous electron-conductive material; thereafter, b) forming a proton-conductive substance on a surface, including surfaces of pores, of the porous electron-conductive material or in the vicinity thereof; and then c) transforming the obtained porous electron-conductive material into an assembly.

<30> A method for producing an electrode for fuel cell, comprising the steps of: a) causing a catalyst to be carried on a porous electron-conductive material; thereafter, c) transforming the obtained porous electron-conductive material into an assembly; and then, b) forming a proton-conductive substance on a surface, including surfaces of pores, of the obtained porous electron-conductive material or in the vicinity thereof.

<31> A method for producing an electrode for fuel cell, comprising the steps of: b) forming aproton-conductive substance on a surface, including surfaces of pores, of a porous electron-conductive material or in the vicinity thereof; thereafter, a) causing a catalyst to be carried on the obtained porous electron-conductive material; and then c) transforming the obtained porous electron-conductive material into an assembly.

<32> A method for producing an electrode for fuel cell, comprising the steps of : b) forming aproton-conductive substance on a surface, including surfaces of pores, of a porous electron-conductive material or in the vicinity thereof; thereafter, c) transforming the obtained porous electron-conductive material into an assembly; and then, a) causing a catalyst to be carried on the obtained porous electron-conductive material.

<33> A method for producing an electrode for fuel cell, comprising the steps of: c) transforming a porous electron-conductive material into an assembly; thereafter, a) causing a catalyst to be carried on the porous electron-conductive material, which is a part of the assembly; and then, b) forming a proton-conductive substance on a surface, including surfaces of pores, of the porous electron-conductive material or in the vicinity thereof.

<34> A method for producing an electrode for fuel cell, comprising the steps of: c) transforming a porous electron-conductive material into an assembly; thereafter, b) forming a proton-conductive substance on a surface, including surfaces of pores, of the obtained porous electron-conductive material, which is a part of the assembly, or in the vicinity thereof; and then, a) causing a catalyst to be carried on the porous electron-conductive material.

<35> In any one of the above items <28> to <34>, the step b) may have a modification step of modifying the surface of the porous electron-conductive material.

<36> In any one of the above items <28> to <35>, the modification step may be inserted before the proton-conductive substance is disposed on the surface, including surfaces of pores, of the porous electron-conductive material or in the vicinity thereof.

<37> In any one of the above items <28> to <36>, the step of forming a proton-conductive substance may be a step in which a methylol group is introduced onto the porous electron-conductive material and the methylol group is reacted with a proton-conductive substance precursor, to form the proton-conductive substance.

<38> In any one of the above items <28> to <37>, the catalyst is a noble metal catalyst, and preferably the catalyst may comprise a catalyst having an element of platinum group.

<39> In any one of the above items <28> to <38>, the catalyst may be Pt or Pt-Ru.

<40> In any one of the above items <28> to <39>, the porous electron-conductive material may be a carbon-based

porous electron-conductive material.

<41> In any one of the above items <28> to <40>, the carbon-based porous electron-conductive material may be selected from the group consisting of carbon black, acetylene black, graphite, carbon fiber, carbon nanotube, fullerene, activated carbon, and glass carbon.

<42> In any one of the above items <28> to <41>, the pores may have the average diameter of 10 μm or less, preferably 1 nm to 1 μm, more preferably 1 nm to 100 nm.

<43> In any one of the above items <28> to <42>, the proton-conductive substance may be not caused to flow out by a cell power generation operation from the surface of the porous electron-conductive material or in the vicinity thereof, in particular from inside the pore thereof. For example, the proton-conductive substance may be not caused to flow out by water from the surface of the material or in the vicinity thereof, in particular from inside the pore thereof.

<44> In any one of the above items <28> to <43>, one end of the proton-conductive substance may be bound to the surface of the porous electron-conductive material through a chemical bond.

<45> In any one of the above items <28> to <44>, the proton-conductive substance may have a sulfonic group ($-SO_3H$), a phosphoric group or a carboxyl group.

<46> In any one of the above items <28> to <45>, the proton-conductive substance may be a proton-conductive polymer having a sulfonic group ($-SO_3H$), a phosphoric group or a carboxyl group.

<47> In any one of the above items <28> to <46>, the proton-conductive substance may have a hydrophobic site, and the substance may be adsorbed in a hydrophobic manner to the surface of the porous electron-conductive material via the hydrophobic site.

<48> In any one of the above items <28> to <47>, the proton-conductive substance may be a proton-conductive polymer, the polymer having a hydrophobic site and the polymer being adsorbed in a hydrophobic manner to the surface of the porous electron-conductive material via the hydrophobic site.

<49> A method for producing a fuel cell comprising the step of: using electrodes for fuel cell obtained with the method described in any one of the above items <28> to <48> as a cathode and/or an anode; and arranging the cathode and/or the anode so as to sandwich an electrolyte therebetween.

<50> In any one of the above items <28> to <49>, the assembly is a catalyst layer formed on one or both of the electrodes for fuel cell.

<51> A method for producing an electrode for fuel cell, comprising the steps of: a) causing a catalyst to be carried on a porous electron-conductive material; b) polymerizing a proton-conductive monomer on a surface, including surfaces of pores, of the porous electron-conductive material or in the vicinity thereof, to form a proton-conductive polymer; and c) transforming the porous electron-conductive material into an assembly, wherein the steps can be changeable in the order thereof.

<52> A method for producing an electrode for fuel cell, comprising the steps of: a) causing a catalyst to be carried on a porous electron-conductive material; thereafter, b) polymerizing a proton-conductive monomer on a surface, including surfaces of pores, of the porous electron-conductive material or in the vicinity thereof , to form a proton-conductive polymer; and then c) transforming the obtained porous electron-conductive material into an assembly.

<53> A method for producing an electrode for fuel cell, comprising the steps of: a) causing a catalyst to be carried on a porous electron-conductive material; thereafter, c) transforming the obtained porous electron-conductive material into an assembly; and then, b) polymerizing a proton-conductive monomer on a surface, including surfaces of pores, of the obtained porous electron-conductive material or in the vicinity thereof, to form a proton-conductive polymer.

<54> A method for producing an electrode for fuel cell, comprising the steps of: b) polymerizing a proton-conductive monomer on a surface, including surfaces of pores, of a porous electron-conductive material or in the vicinity thereof, to form a proton-conductive polymer; thereafter, a) causing a catalyst to be carried on the obtained porous electron-conductive material; and then c) transforming the obtained porous electron-conductive material into an assembly.

<55> A method for producing an electrode for fuel cell, comprising the steps of: b) polymerizing a proton-conductive monomer on a surface, including surfaces of pores, of a porous electron-conductive material or in the vicinity thereof, to form a proton-conductive polymer; c) transforming the obtainedporous electron-conductive material into an assembly; and then, a) causing a catalyst to be carried on the obtained porous electron-conductive material.

<56> A method for producing an electrode for fuel cell, comprising the steps of: c) transforming a porous electron-conductive material into an assembly; thereafter, a) causing a catalyst to be carried on the porous electron-conductive material, which is a part of the assembly; and then, b) polymerizing a proton-conductive monomer on a surface, including surfaces of pores, of the obtained porous electron-conductive material or in the vicinity thereof, to form a proton-conductive polymer.

<57> A method for producing an electrode for fuel cell, comprising the steps of: c) transforming a porous electron-conductive material into an assembly; thereafter, b) polymerizing a proton-conductive monomer on a surface ,

including surfaces of pores, of the obtained porous electron-conductive material, which is a part of the assembly, or in the vicinity thereof, to form a proton-conductive polymer; and then, a) causing a catalyst to be carried on the obtained electron-conductive material.
<58> In any one of the above items <51> to <57>, the step b) may have a modification step of modifying the surface of the porous electron-conductive material.
<59> In the above item <58>, the modification step may be inserted before the proton-conductive monomer is disposed on the surface, including surfaces of pores, of the porous electron-conductivematerial or in the vicinity thereof , or after the monomer is disposed and before forming the polymer.
<60> A method for producing a fuel cell comprising the step of: using electrodes for fuel cell obtained with the method described in any one of the above items <51> to <59> as a cathode and/or an anode; and arranging the cathode and/or the anode so as to sandwich an electrolyte therebetween.
<61> In any one of the above items <51> to <60>, the assembly is a catalyst layer formed on one or both of the electrodes for fuel cell.

## Brief Description of the Drawings

Figs. 1(a) to 1(c) are views schematically showing an electrode for fuel cell prepared in a case where carbon black 1 is used as a porous electron-conductive material.
Fig. 2 is a conceptual diagram of a solid polymer fuel cell.
Fig. 3 is a graph showing results of fuel cell tests of MEA-1 of Example 2 and MEA-2 of Control 1.
Fig. 4 is a graph showing results (Tafel Plotting) of fuel cell tests of MEA-3 of Example 3 and MEA-4 of Control 2.

## Best Mode for Carrying Out the Invention

The present invention will be described in detail hereinafter.

An electrode for fuel cell of the present invention is designed to comprise a proton-conductive substance carrying a catalyst, for example, a proton-conductive polymer, which is disposed on (for example, covers) a surface (including surfaces of pores) of a porous electron-conductive material. The proton-conductive substance, for example, the proton-conductive polymer is obtained by polymerizing a proton-conductive substance precursor, a proton-conductive monomer or an equivalent thereto in the vicinity of the surface.

The electrode for fuel cell of the present invention can be used as an anode or a cathode by using a desired catalyst. The electrode for fuel cell of the present invention can be used in a various kinds of fuel cells, for example, a solid polymer fuel cell, by using a desired catalyst or the like. Examples of a fuel for a fuel cell may include, but are not limited to, hydrogen; hydrocarbons such as alcohols represented by methanol, ethers, and ketones. The electrode for fuel cell of the present invention can be applied to a fuel cell using hydrogen as a fuel, to a direct fuel cell using hydrocarbons as a direct fuel or to reforming fuel cell using hydrocarbons after being reformed into hydrogen.

The catalyst used in the present invention is not limited to the above, and any catalyst can be used as far as providing desired characteristics. For example, a noble metal catalyst, especially, a catalyst system having an element of platinum group, and more specifically, Pt, Pt-Ru or the like can be used. Upon using an anode for DMFC, a catalyst may be Pt-Ru.

The porous electron conductive material used in the present invention may have an electron conductivity in the range of from 100 to 100,000 S/cm.

The porous electron-conductive material may be a carbon-based porous electron-conductive material. Examples of the carbon-based porous electron-conductive material may include, but are not limited to, carbon black such as channel black, furnace black, acetylene black and Ketjen black (registered trademark), graphite, carbon fiber, carbonnanotube, fullerene, activated carbon, and glass carbon.

The porous electron-conductive-material may have pores having many three-phase interfaces with a larger surface area. Therefore, the average of pore diameters of the porous electron-conductive material may be, for example, 10 μm or less, preferably from 1 nm to 1 μm, and more preferably from 1 to 100 m, but not limited thereto. Furthermore, an average primary pore diameter of carbon black that is well used as an electrode for fuel cell is in the range of 10 to 30 nm. Thus, carbon black can be used in the present invention.

A proton-conductive substance provided to the electrode for fuel cell of the present invention is obtained by disposing a proton-conductive substance precursor, a proton-conductive monomer or an equivalent thereto in the vicinity of the surface (including surfaces of pore) of the porous electron-conductive material, followed by a reaction. Furthermore, the term "reaction" includes various kinds of reactions together with various kinds of polymerization reaction by which a polymer is obtained.

The proton-conductive substance in the present invention may be a substance having a sulfonic group ($-SO_3H$) a phosphoric group or a carboxyl group disposed in the vicinity of the surface (including surfaces of pores) of the porous electron-conductive material. The proton-conductive substance may include: polymers having the above-mentioned groups, that is a proton-conductive polymer as well.

The proton-conductive substance precursor is a compound that can be the "proton-conductive substance". Therefore, the proton-conductive substance precursor includes a proton-conductive monomer or an equivalent thereto. The term "a proton-conductive monomer or an equivalent thereto" means a precursor of a proton-conductive polymer. Furthermore, the proton-conductive monomer or an equivalent thereto may include a monomer and an equivalent thereto in the meaning. The equivalent material means a dimer and trimer.

The proton-conductive substance precursor may include: a compound having a sulfonic group ($-SO_3H$), a phosphoric group or a carboxyl group; and a proton-conductive monomer described hereinafter.

Examples of the compounds having a sulfonic group ($-SO_3H$), a phosphoric group or a carboxyl group may include: sulfites (sodium sulfite, potassium sulfite and the like) and the like. Dispersibility of carbon black can be improved in a case where carbon black or the like is used as the porous electron-conductive material and a sulfite is used as the proton-conductive substance precursor, that is, in a case where $-CH_2SO_3H$ or the like is coupled to carbon black.

Examples of the proton-conductive monomers may include: monomers having a vinyl group, a strong acid group such as a sulfonic or phosphonic group, a weak acid group such as a carboxylic group, or a strong base group such as a primary amine, secondary amine, tertiary amine and quarternary amine, or a monomer having a weak base group and a derivative thereof such as an ester in a structure of a molecule such as sodium acrylsulfonate (SAS), sodium methallyl sulfonate (SMS), sodium p styrene sulfonate (SSS), acrylic acid (AA), and others; and allylamine, allylsulfonic acid, allylphosphonic acid, methallylsulfonic acid, methallylphosphonic acid, vinylsulfonic acid,vinylphosphonic acid,styrenesulfonic acid, styrenephosphonic acid, a sulfonic acid or phosphonic acid derivative of acrylamide, ethyleneimine and methacrylic acid. In addition, perfluorosulfonic acid or the like can be used. A monomer matured into a polymer having an ether bond such as polyethylene oxide (for example, ethylene glycol) can be used as well. Furthermore, a salt type such as a sodium salt can also be used as a monomer. In this case, the salts in a polymer matured from a monomer may be preferably transformed into a proton type.

In a case where a proton-conductive polymer is formed with a monomer described above, a homopolymer may be formed using only one kind of monomer described above, and a copolymer may be formed using two or more kinds of monomers described above. Further, by using monomer other than the above, a copolymer may be formed. In a case where a monomer or monomers other than the monomers described above, the monomer or monomers are preferably used to the extent where no proton-conductivity is affected.

The proton-conductive polymer of the present invention is a homopolymer or a copolymer with the monomer described above as a repetition unit. In a case of a copolymer, a monomer or monomers other than the monomers described above can be used.

The proton-conductive substance of the present invention may be not caused to flow out by a cell power generation operation from the surface of the material, especially from inside pores. For example, the proton-conductive substance, for example a proton-conductive polymer, may be not caused to flow out by the action of water from the surface of the material, especially from inside pores. More specifically, one end of the proton-conductive substance of the present inventionmay be bound to the surfaces of the pores of the porous electron-conductive material through a chemical bond. Alternatively, the proton-conductive substance of the present invention may have a hydrophobic site, and the substance may be adsorbed in a hydrophobic manner to the surfaces of the pores of the porous electron-conductive material via the hydrophobic site. In the latter case, examples of the hydrophobic site may include any of general hydrophobic groups in organic chemistry, but not particularly limited thereto. Furthermore, the term "hydrophobic adsorption" means a tendency in which hydrophobic groups or hydrophobic substances are adsorbed to each other in surrounding environment constituted of "water" or "hydrophilic material," which is referred to as "hydrophobic effect," "hydrophobic-medium effect" or "hydrophobic coupling."

The proton-conductive substance of the present invention may be formed so that one end thereof is bound to the surface (including surfaces of pores) of the material according to the following methods. One of the methods is such that a porous electron-conductive material is excited by, for example, a plasma, ultraviolet, an electron beam or y rays so as to generate a reaction start point on a surface (including surfaces of pores) of the material, and bringing the above-described monomer into contact with the reaction start point to thereby obtain a polymer. Another of the methods is such that, after a surface of a porous electron-conductive material is modified, a proton-conductive substance precursor is coupled to the modified point. Still another of the methods is such that the above-described monomer is disposed in the vicinity of the modified point on a material surface (including surfaces of pores) and polymerized there to obtain a polymer using a general polymerization method, and thereafter, the polymer can also be caused to be chemically bound to the obtained porous electron conductive material by using, for example, a coupling agent.

Description will be given for an electrode for fuel cell of the invention with reference to the accompanying drawings.

The electrode for fuel cell of the invention can be made of primary particles, secondary particles and an assembly thereof, each having three-phase interfaces formed on a microscopic scale .

Figs. 1(a) to 1(c) are views schematically showing an electrode 100 for fuel cell prepared in a case where carbon black 1 is used as a porous electron-conductive material. Fig. 1 (a) is an enlarged view of a primary particle 6 formed with the carbon black 1 as a center. A Pt catalyst 3 is carried in micorpores and a surface of the carbon black 1. A proton-conductive polymer 5 is arranged so as to cover the pores and the surface of the carbon black 1 and the Pt catalyst 3 to thereby form the primary particle 6. Furthermore, Fig. 1 shows an example using a proton-conductive polymer as a proton-conductive substance.

Fig. 1 (b) is a view showing secondary particles 7 formed by clustering the primary particles 6 (in Fig. 1 (b), encircled with dotted line)of Fig. 1(a). Since each of the primary particles 6 is provided with the proton-conductive polymer, the proton-conductive polymer is provided on a surface and inside pores of the secondary particles 7.

Fig. 1(c) is a view showing an assembly 9 formed by collecting the secondary particles 7 of the carbon black 1 shown in Fig. 1 (b) . A part of the secondary particles contained in the assembly 9 is shown in Fig. 1 (c) . The assembly 9 or collected state similar thereto is used as an electrode for fuel cell. Since three-phase interfaces are formed in the primary particles (on a microscopic scale) as shown in Fig. 1 (a) and held as they are in the secondary particles 7 and an assembly 9, the obtained electrode for fuel cell may have improved characteristics.

The electrode for fuel cell of the present invention may be employed for a fuel cell, for example, a solid polymer fuel cell, especially, a methanol fuel cell including a direct methanol solid polymer fuel cell or a reformed methanol solid polymer fuel cell.

Brief description will be given for a construction of a fuel cell below.

A fuel cell is, for example, as shown in a conceptual view of a solid polymer fuel cell 20 of Fig. 2, constituted of a cathode 21, an anode 23, and an electrolyte 25 sandwiched between the electrodes.

In a case of a methanol fuel cell, a construction may be adopted in which a reformer is placed on the anode electrode side so as to work a reformed methanol fuel cell.

The electrode for fuel cell of the invention can be produced according to the followingprocess: a) a step of causing a catalyst to be carried on a porous electron-conductive material, b) a step of forming a proton-conductive substance in the vicinity of a surface, including pores, of the porous electron-conductive material, and c) a step of transforming the porous electron-conductive material into an assembly, wherein the steps can be changeable in the order thereof. In a case where, in step b), a proton-conductive polymer is formed using a proton-conductive monomer or an equivalent thereto, a step b) -1) described below can be used. That is, the step b) -1 is a step of forming a proton-conductive polymer by polymerizing a proton-conductive monomer in the vicinity of the surface, including pores, of the porous electron-conductive material.

More specifically, a first process of the method of the present invention may comprise (a → b → c) : a) a step of causing a catalyst to be carried on a porous electron-conductive material; thereafter, b) a step of forming a proton-conductive substance in the vicinity of a surface, including pores, of the porous electron-conductive material; and c) a step of transforming the obtained porous electron-conductive material into an assembly.

A second process of the method of the present invention may comprise (a → c → b): a) a step of causing a catalyst to be carried on a porous electron-conductive material; thereafter , c) a step of transforming the obtainedporous electron-conductive material into an assembly; and then, b) a step of forming a proton-conductive substance in the vicinity of a surface, including pores, of the obtained porous electron-conductive material.

A third process of the method of the present invention may comprise (b → a → c) : b) a step of forming a proton-conductive substance in the vicinity of a surface, including pores, of a porous electron-conductive material; thereafter, a) a step of causing a catalyst to be carried on the obtained porous electron-conductive material; and c) a step of transforming the obtained porous electron-conductive material into an assembly.

A fourth process of the method of the present invention may comprise (b → c → a) : b) a step of forming a proton-conductive substance in the vicinity of a surface, including pores, of a porous electron-conductive material; thereafter, c) a step of transforming the obtained porous electron-conductive material into an assembly; and a) a step of causing a catalyst to be carried on the obtained porous electron-conductive material.

A fifth process of the method of the present invention may comprise (c → a → b) : c) a step of transforming a porous electron-conductive material into an assembly; thereafter, a) a step of causing a catalyst to be carried on the porous electron-conductive material, which is a part of the assembly; and b) a step of forming a proton-conductive substance in the vicinity of a surface, including pores, of the porous electron-conductive material.

A sixth process of the method of the present invention may comprise (c → b → a): c) a step of transforming a porous electron-conductive material into an assembly; thereafter, b) a step of forming a proton-conductive substance in the vicinity of a surface, including pores, of the porous electron-conductive material, which is a part of the assembly; and a) a step of causing a catalyst to be carried on the porous electron-conductive material.

The step b) -1) can be used instead of the step b) of each of the first to sixth processes.

Furthermore, the step b) of each of the processes may include a modification step of modifying the surface

of the porous electron-conductive material. The modification step is preferably inserted before the proton-conductive substance is disposed in the vicinity of the surface including pores. Furthermore, in case where the step b) is replaced with the step b)-1), the modification step may be inserted before the proton-conductive monomer is disposed in the vicinity of the surface including pores or before a polymer is formed after a monomer is disposed. With the modification step adopted, it is possible either to couple a surface of a porous electron-conductive material and a proton-conductive substance, for example a proton-conductive polymer, through a chemical bond or to accelerate the coupling. Alternatively, with the modification step adopted, it is possible to accelerate hydrophobic adsorption between a surface of a porous electron-conductive material and a proton-conductive substance, for example, a proton-conductive polymer.

More specifically, the modification step in a case where the porous electron-conductive material is carbon black can be a step of introducing a methylol group onto the surface of the carbon black.

After the step of introducing a methylol group, which is a modification step, the methylol group ($-CH_2OH$) can be reacted with a proper proton-conductive substance precursor, thereby enabling a proton-conductive substance having $-SO_3H$ or the like to be formed. To be more concrete, by using sodium sulfite as a proton-conductive substance precursor, $-CH_2SO_3H$ can be formed as a proton-conductive substance. By using acrylamide t-butylsulfonic acid (ATBS, $CH_2=CH-CO-NH-C(CH_3)-CH_2-SO_3H$), which is a proton-conductive monomer as a proton-conductive substance precursor, it is possible to form polyacrylamid t-butylsulfonic acid (PATBS), which is a proton-conductive polymer as a proton-conductive substance.

Examples:

More detailed description will be given for the invention based on examples, but the invention is not limited to the examples.

(Example 1)

Carbon black (XC-72, manufactured by Cabot Co.) was used as a porous electron-conductive material. Furthermore, actually used was carbon black carrying 20 wt% Pt (XC-72, manufactured by E-TEK Co.) which was commercially available in a state where Pt was carried on the carbon black.

A methylol group was introduced onto the carbon black carrying 20 wt% Pt with the following step (1).

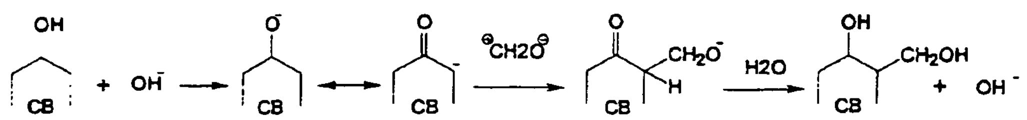


(1)

Specifically, an electrophilic substitution reaction was used based on a method of Fujiki et al., (Kazuhiro FUJIKI et al. , Journal of Japan Rubber Society, 64 (6) (1991) 378-385) to introduce a methylol group ($-CH_2-OH$) onto surfaces of carbon black. A mixture of carbon black carrying Pt, an aqueous formaldehyde solution and sodium hydroxide was caused to react with each other at 70°C for 24 hr while being agitated. After the reaction, the resulting substance (carbonblack) was filtered out and dried at 100°C, to obtain a methylol introduced product A-1.

Then, according to the following step (2), a redox polymerization of a proton-conductive polymer was carried out using the methylol groups of the methylol group introduced product A-1 as reaction sites. Used as a proton-conductive monomer was a compound obtained by recrystallizing acrylamide t-butylsulfonic acid (ATBS) in methanol. Furthermore, a proton-conductive polymer PATBS (polyacrylamide t-butylsulfonic acid) having ATBS as a repetition unit is higher reactivity and higher sulfonic group content (4.46 mmol/g).

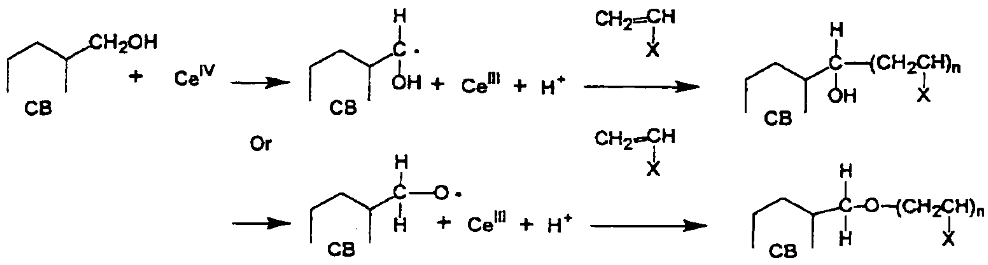


(2)

To be detailed, according to a method of Tsubokawa et al. (N. Tsubokawa et al., J. Macromol. Sci.-Chem. A, 25(9) (1988) 1159-1171), polymer graft polymerization was conducted through redox polymerization in the presence of Ce (IV). Added into a two-necked round-bottomed flask were the methylol introduced product A-1 and 0.5 mol/L aqueous ATBS monomer solution and further 0.2 mol/L $Ce^{4+}$ solution, and the resulting mixture was polymerized at 30°C with stirring. After the reaction, the polymer was dried in vacuo, to obtain PATBS coupled with carbon black carrying Pt B-1, in which PATBS is coupled with carbon black carrying Pt via methylol groups. Furthermore, the PATBS coupled with carbon black carrying Pt B-1 was subj ected to Soxhlet extraction for 24 hr and a non-graft polymer was removed, to isolate the PATBS coupled with carbon black carrying Pt B-1.

It was confirmed from results of an elemental analysis and FT-IR measurement that the PATBS coupled Pt carrying carbon black B-1 has PATBS polymerized therein. In addition, it was confirmed that Pt activity was retained by cyclic voltammetry measurement.

(Example 2)

Used as a porous electron-conductive material was Ketj en Black carrying 49.1 wt% Pt (Pt, 46.1% on Ketjen Black EC, Lot No. 102-0291, manufactured by Tanaka Noble Metal K.K. and hereinafter referred to as "TEC10E50E"). A methylol group was introduced onto the TEC10E50E in a manner similar to Example 1, to obtain methylol-introduced TEC10E50E (A-2).

Distilled water was added into the methylol-introduced TEC10E50E (A-2) and the mixture was stirred. A PTFE dispersion (polytetrafluoroethylene 60 wt% dispersion in water, manufactured by Aldrich CO.) was further added therein and stirred, to obtain a paste product D-1. The paste product D-1 was printed on carbon paper (manufactured by TORAY INDUSTRIES, INC.) by means of a screen printing method and the printed carbon paper was dried to obtain an electrode precursor F-1 having a catalyst layer precursor E-1 thereon.

An ATBS monomer solution was introduced onto the catalyst layer precursor E-1 of the electrode precursor F-1 and thereafter, a reaction starting agent solution having cerium (IV) was introduced thereonto to conduct a polymerization reaction in a manner similar to step (2) of Example 1. After the polymerization reaction, the reaction product was subjected to Soxhlet extraction to filter out non-graft polymer having no chemical bond to surfaces of carbon black in the catalytic layer precursor and to thereby obtain a cathode G-1.

An anode H-1 and an electrolyte film I-1 were prepared separately from the cathode G-1. The anode H-1 used was the electrode precursor F-1. The electrolyte film I-1 used was Nafion 112 washed with 1 N nitric acid and distilled water.

The electrolyte film I-1 was sandwichedbetween the cathode G-1 and the anode H-1, and the assembly was hot pressed at 130°C under 2 MPa for one minute to thereby obtain MEA-1 (MEA: membrane electrode assembly).

(Control 1)

MEA-2 of Control 1 was produced so as to have a structure similar to that of MEA-1 of Example 2, except that a cathode was different from the cathode of the MEA-1 of Example 2. That is, the cathode G-2 having electrode precursor F-2 was used, in which the electrode precursor F-2 had a structure similar to the electrode precursor F-1.

Data of MEA-1 of Example 2 and MEA-2 of Control 1 are summarized in Table 1.

Table 1:

| MEA-1 of Example 2 and MEA-2 of Control 1 | | | | | |
|---|---|---|---|---|---|
| | Electrolyte film | Anode | | Cathode | |
| | | Pt weight (mg/ $cm^2$) | Graft polymerization | Pt weight ($mg/cm^2$) | Graft polymerization |
| MEA-1 | Nafion 112 | 0.36 | None | 0.19 | Done* |
| MEA-2 | Nation 112 | 0.48 | None | 0.19 | None |

* after a catalyst layer precursor was formed, an ATBS monomer solution was introduced to conduct graft polymerization of poly-ATBS.

<Fuel Cell Power Generation Test -Wide current Density Region->

A fuel cell power generation test (a wide current density region) was conducted using MEA-1 and MEA2. The test was conducted as follows.

MEA-1 or MEA-2 was set in a PEMFC cell (manufactured by Electro Chem Co.), humidified $N_2$ gas was flowed through the anode and cathode to thereby humidify both electrodes for 3.5 hr. Thereafter, humidified $N_2$ gas was changed into $H_2$ gas at 100 mL/min at the anode and into $O_2$ gas at 500 mL/min at the cathode, to eventually replace a gas in the cell with a fuel gas. Then, a current at 1000 $mA/cm^2$ was flowed through the cell. After the system was stabilized, I-V was measured. The I-V measurement was conducted after 3 hours of scanning at a speed of a current density width of 50 $mA/cm^2$/30 sec in a region of 0 to 1000 $mA/cm^2$. Fig. 3 shows results of the test.

In Fig. 3, the mark o indicates MEA-1 and the mark ● indicates MEA-2. MEA-1 (○) exhibits comparatively good power generation performance. Comparison with MEA-1 (o) to MEA-2 (●) shows that Poly-ATBS introduced by graft polymerization plays a role of proton-conduction in a catalytic layer.

(Example 3)

A methylol group introduced TEC10E50E (A-2) was obtained in a manner similar to Example 2. After an aqueous ATBS monomer solution was introduced onto the methylol group introduced product (A-2), a starting agent solution was introduced to conduct a polymerization reaction on an oil bath at 35°C for 48 hr. After the reaction was completed, a reaction product was collected through filtering and dried. In order to further remove a non-graft polymer having no chemical bond to surfaces of carbon black, the dry product was subjected to Soxhlet extraction to obtain a PATBS coupled with carbon black carrying Pt B-2.

A catalyst layer E-2 was formed on carbon paper (manufactured by TORAY INDUSTRIES, INC.) as follows.

The PATBS coupled with carbon black carrying Pt B-2 and distilled water were mixed and stirred. Added into the mixture was a Nafion solution (5 wt% solution of Nafion perfluorinated ion-exchange resin containing 15 to 20% water) and the mixture was stirred for about 30 min. Further added into the mixture was a PTFE dispersion (60 wt% dispersion in water of Polytetrafluoroethylene, manufactured by Aldrich Co.) and the mixture was stirred, to obtain a catalyst layer paste (D-2). The catalyst layer paste D-2 was printed on carbon paper (manufactured by TORAY INDUSTRIES, INC.) by means of a screen printing method and the printed carbon paper was dried, to obtain a cathode G-3.

An electrode and a film having similar structures to those of the anode H-1 and the electrolyte film I-1, respectively, were prepared separately from the cathode G-3 to obtain MEA-3 in a manner similar to Example 2.

(Control 2)

MEA-4 of Control 2 was produced. MEA-4 of Control 2 had a structure similar to that of MEA-4 of Control 1, except that MEA-4 of Control 2 was different in Pt weight from that of MEA-2 of Control 1.

Data of MEA-3 of Example 3 and MEA-4 of Control 2 are summarized in Table 2.

Table 2:

| MEA-3 of Example 3 and MEA-4 of Control 2 | | | | | |
|---|---|---|---|---|---|
| | Electrolyte film | Anode | | Cathode | |
| | | Pt weight (mg/$cm^2$) | Graft polymerization | Pt weight (mg/$cm^2$) | Graft polymerization |
| MEA-3 | Nation 112 | 0.41 | None | 0.43 | Done* |
| MEA-4 | Nation 112 | 0.40 | None | 0.43 | None |

* before a catalyst layer precursor was formed, an ATBS monomer solution was introduced in a state of carbon black particles to conduct graft polymerization of poly-ATBS.

<Fuel Cell Power Generation Test -Low Current Density Region->

A fuel cell power generation test (a low current density region) was conducted using MEA-3 and MEA-4. The test was conducted in the same manner as in the fuel cell power generation test (wide current density region) before the start of I-V measurement and the I-V measurement was conducted in the following way.

The I-V was measured such that a current at 1000 mA/$cm^2$ was flowed for 10 min prior to the I-V measurement and the I-V measurement was actually conducted after 3 hours of scanning at a speed of a current density width of 10 mA/$cm^2$/10 sec in a region of 0 to 100 mA/$cm^2$. Results of the test were Tafel plotted (see Fig. 4). Furthermore, Tafel equation can be expressed as shown by the following equation (1).

$$\eta = b \log_{10} i_0 - b \log_{10} i \qquad \text{Equation (1)}$$

In Fig. 4, the mark ♦ indicates MEA-3 and the mark • indicates MEA-4. Table 3 shows parameters obtained by fitting.

Table 3:

| Tafel equation parameters of MEA-3 and MEA-4 | | | |
|---|---|---|---|
| | $Log_{10}i_0$ | -b (V/dec) | $i_0$ (A/$cm^2$) |
| MEA-4 | -5.82 | 0.079 | 1.5E-06 |
| MEA-3 | -5.02 | 0.092 | 9.5E-06 |

A "y" intercept of Tafel plotting indicates an exchange current density $i_0$. An exchange current density is proportional to an electrode reaction area (three-phase interfaces). Fig. 4 and Table 3 show that in comparison with exchange current densities $i_0$ (y intercept) between MEA-3 (♦) andMEA-4 (●), MEA-3 (♦) is larger than MEA-4 (●). It is suggested that in MEA-3 (♦), three-phase interfaces increase by graft polymerization, especially a catalyst Pt inside primary pores on carbon black is effectively used. On the other hand, it is suggested that in MEA-4 (●), a catalyst Pt inside primary pores on carbon black is not effectively used.

(Example 4)

A methylol group introduced carbon black TEC10E50E (A-2) was obtained in a manner similar to Example 2. The methylol, group introduced carbon black TEC10E50E (A-2) together with an aqueous formaldehyde solution and sodium sulfite was put into a reaction vessel and the mixture was stirred at 110°C for 24 hr. Specifically, reactions shown below were conducted to obtain methylsulfonic group coupled with carbon black B-3.

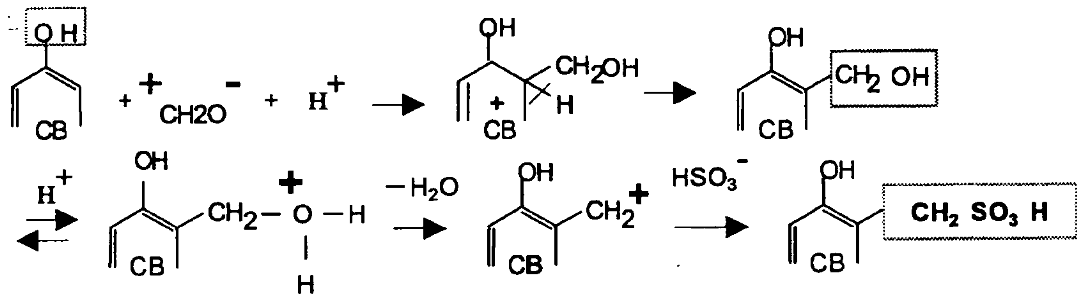

The obtained methylsulfonic group coupled with carbon black B-3 was used to obtain a cathode G-5 in a manner similar to Example 3. An electrode and an electrolyte film having structures similar to those of the anode H-1 and the electrolyte I-1, respectively, were prepared to thereby obtain MEA-5 in a manner similar to Example 2. A cell performance of MEA-5 was observed to be more improved than MEA-4 of Control 2 in a manner similar to Example 3.

## Claims

1. An electrode for fuel cell comprising a porous electron-conductive material carrying a catalyst,
   wherein a proton-conductive substance is arranged on a surface, including surfaces of pores, of the porous electron-conductive material or in the vicinity of the surface; and
   the proton-conductive substance is obtained by carrying out coupling or polymerizationof a proton-conductive substance precursor, a proton-conductive monomer or an equivalent thereto on the surface or in the vicinity thereof.

2. The electrode for fuel cell according to claim 1, wherein the catalyst is a noble metal catalyst.

3. The electrode for fuel cell according to claim 1 or 2, wherein the catalyst is Pt or Pt-Ru.

4. The electrode for fuel cell according to any one of claims 1 to 3, wherein the porous electron-conductive material is a carbon-based porous electron-conductive material.

5. The electrode for fuel cell according to any one of claims 1 to 4, wherein the carbon-based porous electron-conductive material is selected from the group consisting of carbon black, acetylene black, graphite, carbon fiber, carbon nanotube, fullerene, activated carbon, and glass carbon.

6. The electrode for fuel cell according to any one of claims 1 to 5, wherein the pores have the average diameter of 10 μm or less.

7. The electrode for fuel cell according to any one of claims 1 to 6, wherein the proton-conductive substance is not caused to flow out by a cell power generation operation from the surface of the porous electron-conductive material or in the vicinity thereof.

8. The electrode for fuel cell according to any one of claims 1 to 7, wherein one end of the proton-conductive substance is bound to the surface of the porous electron-conductive material through a chemical bond.

9. The electrode for fuel cell according to any one of claims 1 to 8, wherein the proton-conductive substance has a sulfonic group ($-SO_3H$), a phosphoric group or a carboxyl group.

10. The electrode for fuel cell according to any one of claims 1 to 9, wherein the proton-conductive substance is a proton-conductive polymer having a sulfonic group ($-SO_3H$), a phosphoric group or a carboxyl group.

11. The electrode for fuel cell according to any one of claims 1 to 10, wherein the proton-conductive substance has a hydrophobic site, and the substance is adsorbed in a hydrophobic manner to the surface of the porous electron-conductive material via the hydrophobic site.

12. The electrode for fuel cell according to any one of claims 1 to 11, wherein the proton-conductive substance is a

proton-conductive polymer, the polymer having a hydrophobic site and the polymer being adsorbed in a hydrophobic manner to the surface of the porous electron-conductive material via the hydrophobic site.

**13.** A fuel cell having an electrode for fuel cell according to any one of claims 1 to 12.

**14.** A solid polymer fuel cell having an electrode for fuel cell according to any one of claims 1 to 12.

**15.** A direct methanol solid polymer fuel cell having an electrode for fuel cell according to any one of claims 1 to 12.

**16.** A method for producing an electrode for fuel cell, comprising the steps of:

a) causing a catalyst to be carried on a porous electron-conductive material;
b) forming a proton-conductive substance on a surface, including surfaces of pores, of the porous electron-conductive material or in the vicinity thereof; and
c) transforming the porous electron-conductive material into an assembly,

wherein the steps can be changeable in the order thereof.

**17.** A method for producing an electrode for fuel cell, comprising the steps of:

a) causing a catalyst to be carried on a porous electron-conductive material;
thereafter, b) forming a proton-conductive substance on a surface, including surfaces of pores, of the porous electron-conductive material or in the vicinity thereof; and
then c) transforming the obtained porous electron-conductive material into an assembly.

**18.** A method for producing an electrode for fuel cell, comprising the steps of:

a) causing a catalyst to be carried on a porous electron-conductive material;
thereafter, c) transforming the obtained porous electron-conductive material into an assembly; and
then, b) forming a proton-conductive substance on a surface, including surfaces of pores, of the obtained porous electron-conductive material or in the vicinity thereof.

**19.** A method for producing an electrode for fuel cell, comprising the steps of:

b) forming a proton-conductive substance on a surface, including surfaces of pores, of a porous electron-conductive material or in the vicinity thereof;
thereafter, a) causing a catalyst to be carried on the obtained porous electron-conductive material; and
then c) transforming the obtained porous electron-conductive material into an assembly.

**20.** A method for producing an electrode for fuel cell, comprising the steps of:

b) forming a proton-conductive substance on a surface, including surfaces of pores, of a porous electron-conductive material or in the vicinity thereof;
thereafter, c) transforming the obtained porous electron-conductive material into an assembly; and
then, a) causing a catalyst to be carried on the obtained porous electron-conductive material.

**21.** A method for producing an electrode for fuel cell, comprising the steps of:

c) transforming a porous electron-conductive material into an assembly;
thereafter, a) causing a catalyst to be carried on the porous electron-conductive material, which is a part of the assembly; and
then, b) forming a proton-conductive substance on a surface, including surfaces of pores, of the porous electron-conductive material or in the vicinity thereof.

**22.** A method for producing an electrode for fuel cell, comprising the steps of:

c) transforming a porous electron-conductive material into an assembly;
thereafter, b) forming a proton-conductive substance on a surface, including surfaces of pores, of the

obtained porous electron-conductive material, which is a part of the assembly, or in the vicinity thereof; and then, a) causing a catalyst to be carried on the porous electron-conductive material.

**23.** The method according to any one of claims 16 to 22, wherein the step b) has a modification step of modifying the surface of the porous electron-conductive material.

**24.** The method according to any one of claims 16 to 23, wherein the modification step is inserted before the proton-conductive substance is disposed on the surface, including surfaces of pores, of the porous electron-conductive material or in the vicinity thereof.

**25.** The method according to any one of claims 16 to 24, wherein the step of forming a proton-conductive substance is a step in which a methylol group is introduced onto the porous electron-conductive material and the methylol group is reacted with a proton-conductive substance precursor, to form the proton-conductive substance.

**26.** The method according to any one of claims 16 to 25, wherein the catalyst is a noble metal catalyst.

**27.** The method according to any one of claims 16 to 26, wherein the catalyst is Pt or Pt-Ru.

**28.** The method according to any one of claims 16 to 27 , wherein the porous electron-conductive material is a carbon-based porous electron-conductive material.

**29.** The method according to claim 28, wherein the carbon-based porous electron-conductive material is selected from the group consisting of carbon black, acetylene black, graphite, carbon fiber, carbon nanotube, fullerene, activated carbon, and glass carbon.

**30.** The method according to any one of claims 16 to 29, wherein the pores have the average diameter of 10 $\mu$m or less.

**31.** The method according to any one of claims 16 to 29, wherein the proton-conductive substance is not caused to flow out by a cell power generation operation from the surface of the porous electron-conductive material or in the vicinity thereof, especially from inside the pores.

**32.** The method according to any one of claims 16 to 31, wherein one end of the proton-conductive substance is bound to the surface of the porous electron-conductive material through a chemical bond.

**33.** The method according to any one of claims 16 to 32, wherein the proton-conductive substance has a sulfonic group ($-SO_3H$), a phosphoric group or a carboxyl group.

**34.** The method according to any one of claims 16 to 33, wherein the proton-conductive substance is a proton-conductive polymer having a sulfonic group ($-SO_3H$), a phosphoric group or a carboxyl group.

**35.** The method according to any one of claims 16 to 34, wherein the proton-conductive substance has a hydrophobic site, and the substance is adsorbed in a hydrophobic manner to the surface of the porous electron-conductive material via the hydrophobic site.

**36.** The method according to any one of claims 16 to 35, wherein the proton-conductive substance is a proton-conductive polymer, the polymer having a hydrophobic site and the polymer being adsorbed in a hydrophobic manner to the surface of the porous electron-conductive material via the hydrophobic site.

**37.** A method for producing a fuel cell, comprising the steps of:

using electrodes for fuel cell obtained with a method according to any one of claims 16 to 36 as a cathode and/or an anode; and
arranging the cathode and/or the anode so as to sandwich an electrolyte therebetween.

**38.** The method according to any one of claims 16 to 37, wherein the assembly is a catalyst layer formed on one or both of the electrodes for fuel cell.

Fig. 1

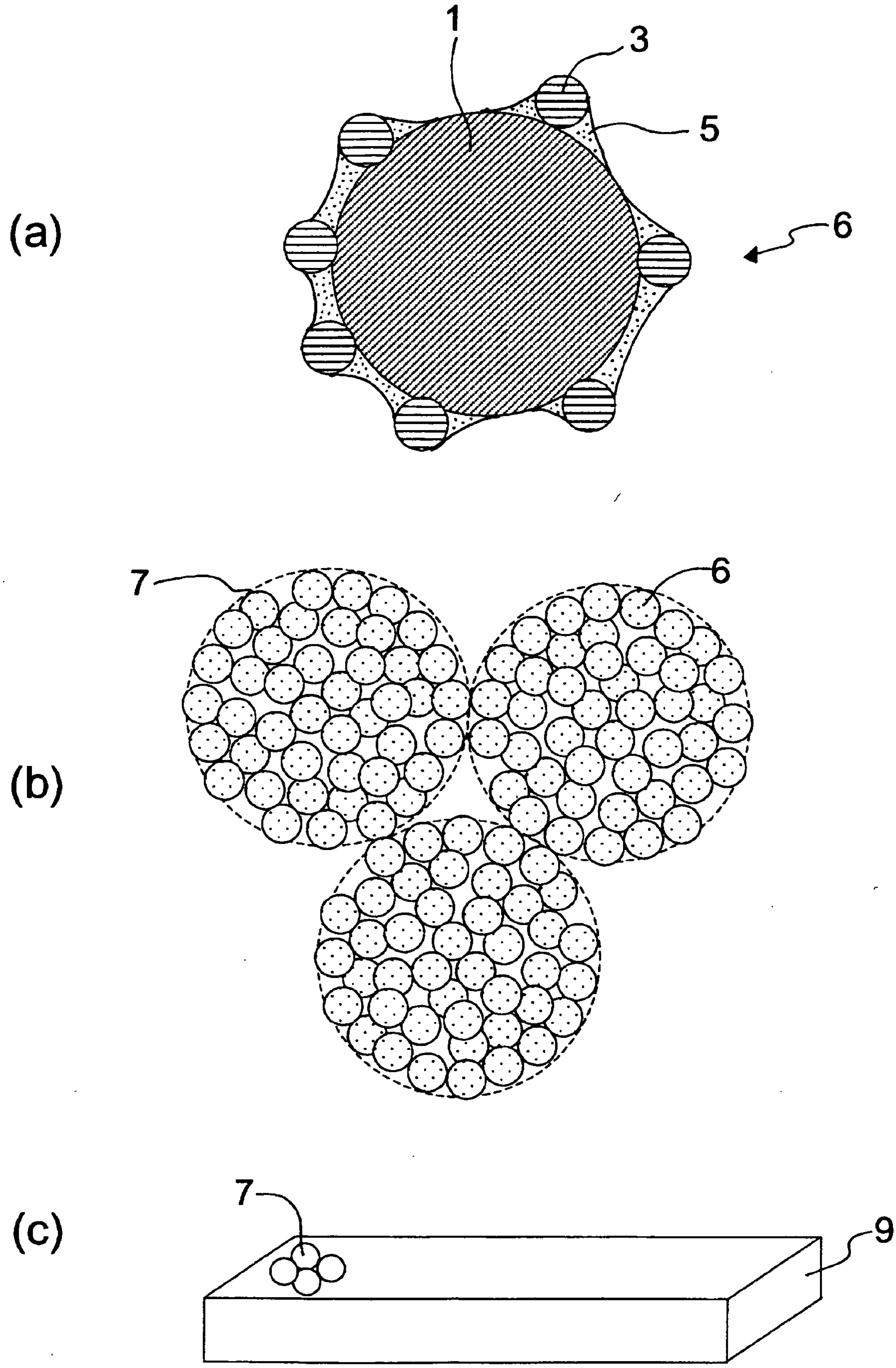

Fig. 2

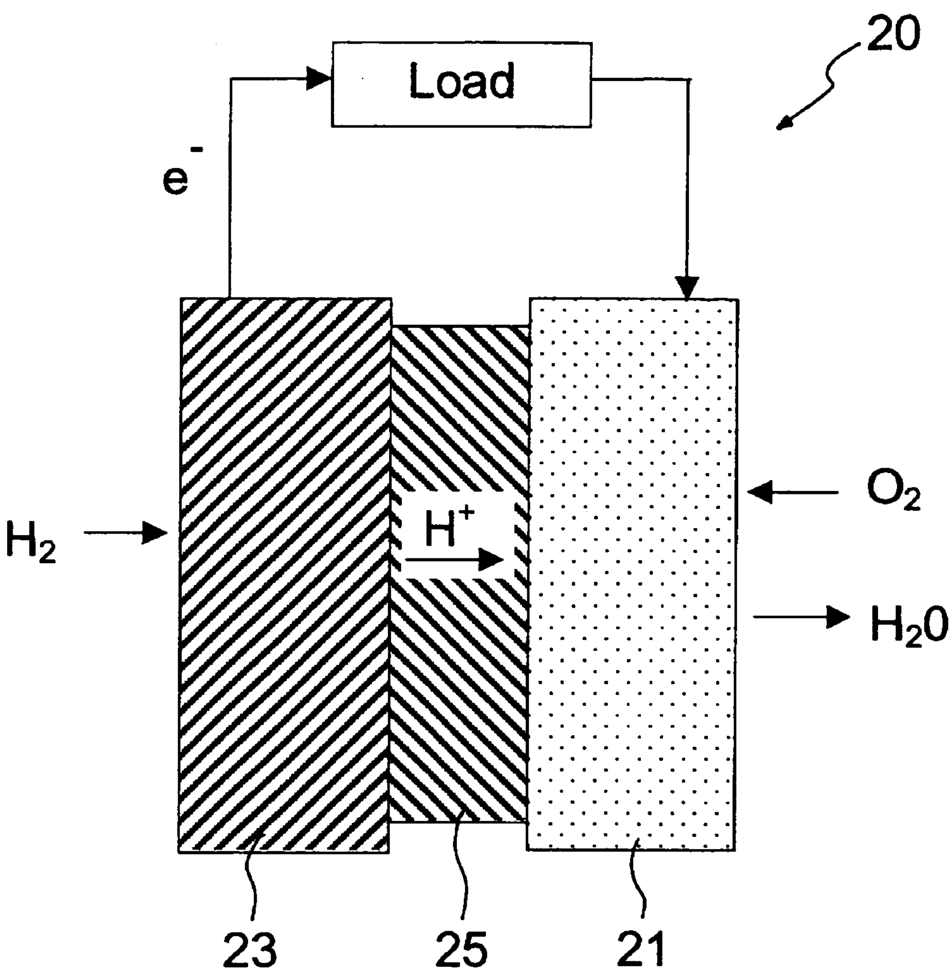

Fig. 3

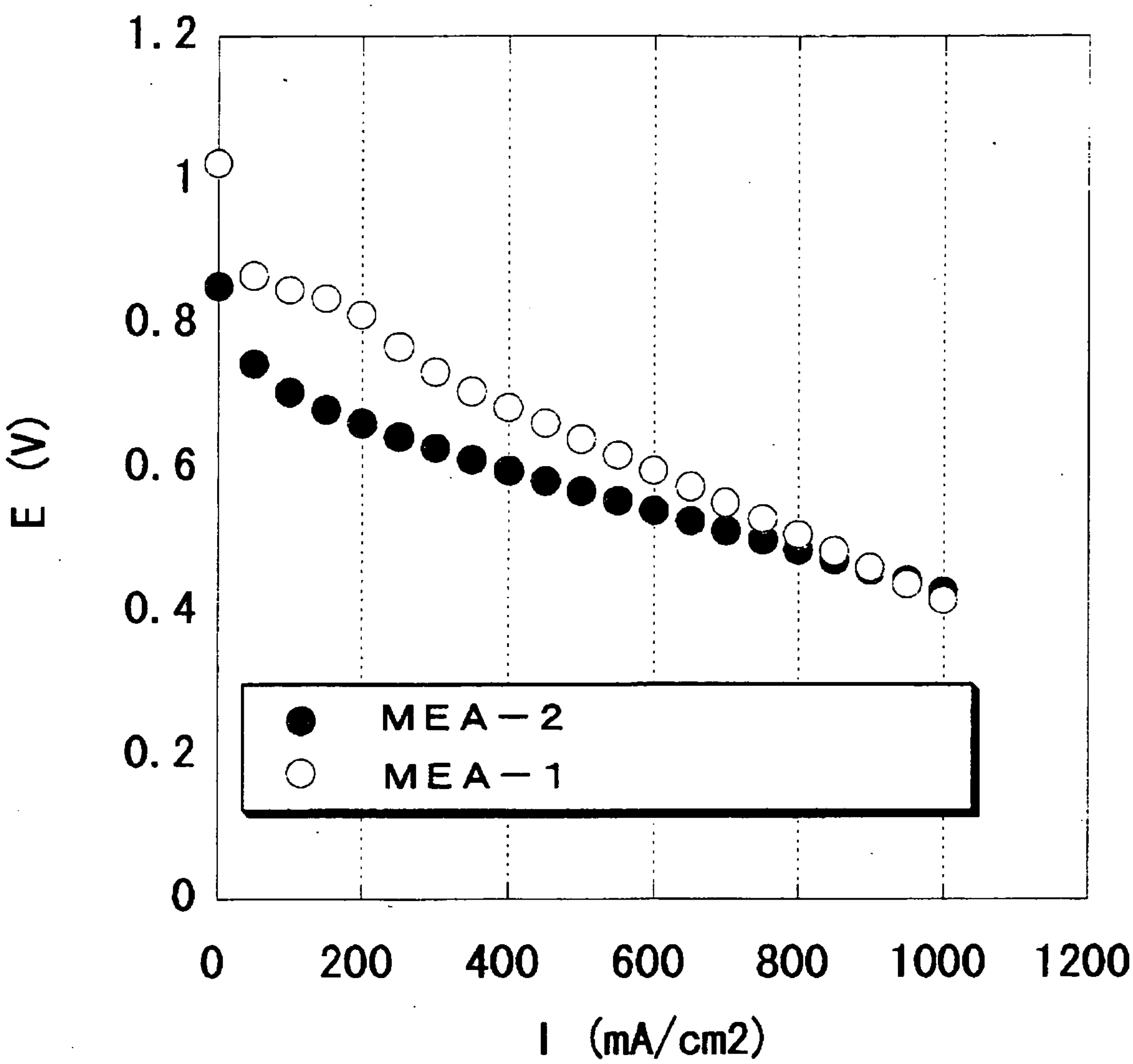

Fig. 4

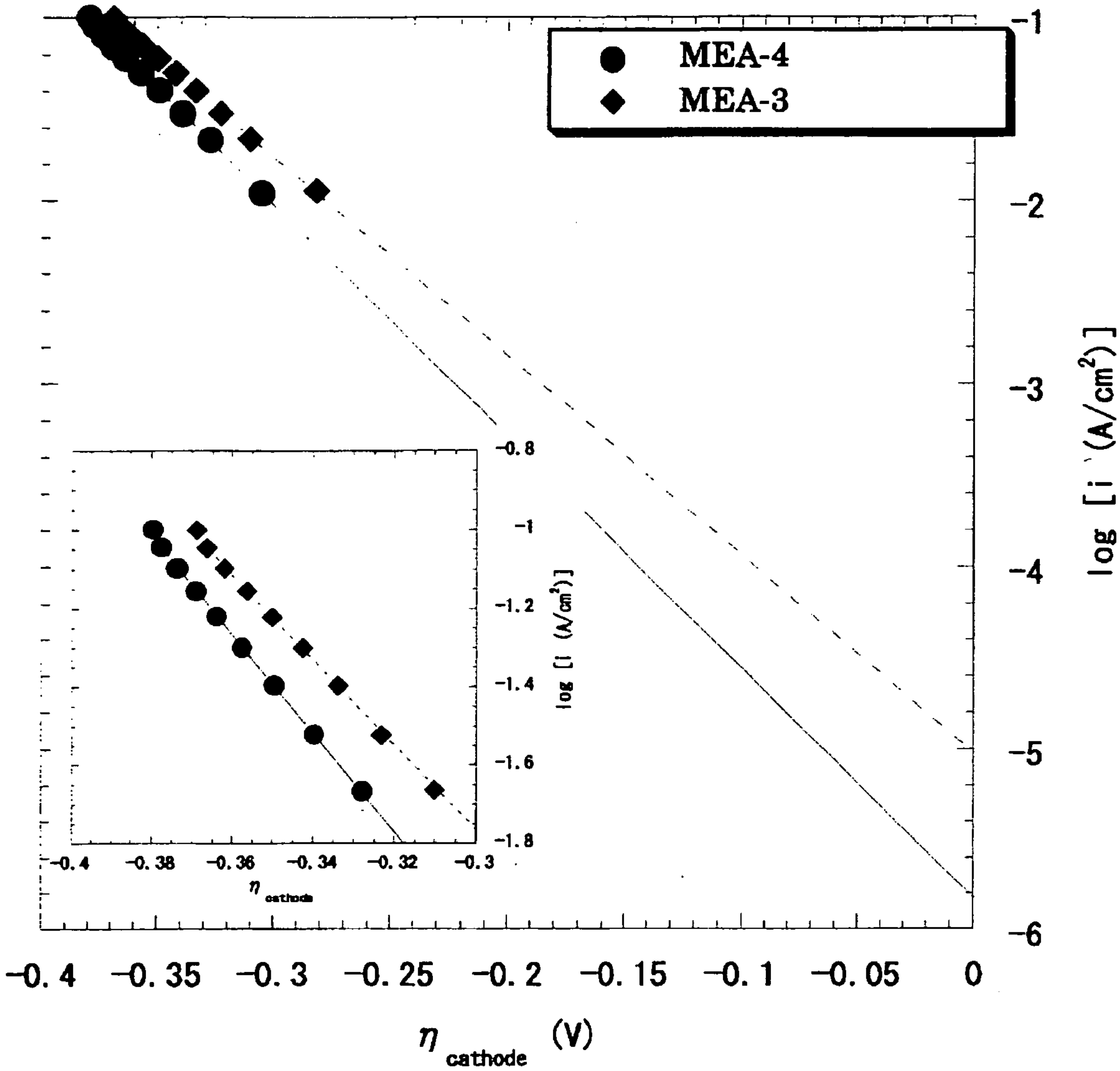
MEA-4
MEA-3
-1
-2
-3
-4
-5
-6
log [i (A/cm$^2$)]
-0.4
-0.35
-0.3
-0.25
-0.2
-0.15
-0.1
-0.05
0
η cathode (V)
-0.8
-1
-1.2
-1.4
-1.6
-1.8
-0.4
-0.38
-0.36
-0.34
-0.32
-0.3
η cathode

## INTERNATIONAL SEARCH REPORT

International application No.
PCT/JP03/10399

**A. CLASSIFICATION OF SUBJECT MATTER**
Int.Cl$^7$ H01M4/86, H01M4/88, H01M8/10

According to International Patent Classification (IPC) or to both national classification and IPC

**B. FIELDS SEARCHED**

Minimum documentation searched (classification system followed by classification symbols)
Int.Cl$^7$ H01M4/86, H01M4/88, H01M8/10

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| X<br>A | US 4610938 A (Electric Power Research Institute), 09 September, 1986 (09.09.86), Column 2, line 65 to column 3, line 20 & JP 62-51165 A Claims; page 3, lower left column, line 9 to lower right column, line 9 | 1-10,13-22, 26-34,37-38<br>11-12,23-25, 35-36 |
| X<br>A | JP 2001-283865 A (Toray Industries, Inc.), 12 October, 2001 (12.10.01), Claims; Par. No. [0062] (Family: none) | 1-10,13-15<br>11-12,16-38 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 October, 2003 (01.10.03) | Date of mailing of the international search report<br>14 October, 2003 (14.10.03) |
| Name and mailing address of the ISA/<br>Japanese Patent Office<br><br>Facsimile No. | Authorized officer<br><br>Telephone No. |

Form PCT/ISA/210 (second sheet) (July 1998)